# EUROPÄISCHE PATENTSCHRIFT

(11) **EP 2 943 937 B1**
(45) Veröffentlichungstag und Bekanntmachung des Hinweises auf die Patenterteilung: **04.11.2020**
(21) Anmeldenummer: 13814097.5
(22) Anmeldetag: 18.12.2013
(51) Int. Cl.: G07C 9/00, B60R 25/20

(54) **SYSTEM FÜR EIN FAHRZEUG ZUR AUSLÖSUNG WENIGSTENS EINER FUNKTION EINER SICHERHEITSVORRICHTUNG**
SYSTEM FOR A VEHICLE FOR TRIGGERING AT LEAST ONE FUNCTION OF A SAFETY DEVICE
SYSTÈME POUR VÉHICULE PERMETTANT DE DÉCLENCHER AU MOINS UNE FONCTION D'UN DISPOSITIF DE SÉCURITÉ

(30) Priorität: 10.01.2013 DE 102013100236
(43) Veröffentlichungstag der Anmeldung: 18.11.2015
(73) Patentinhaber: Huf Hülsbeck & Fürst GmbH & Co. KG, 42551 Velbert (DE)
(72) Erfinder: SCHINDLER, Mirko, 42549 Velbert (DE)
(74) Vertreter: Bals, Rüdiger
(86) Internationale Anmeldenummer: PCT/EP2013/077032
(87) Internationale Veröffentlichungsnummer: WO 2014/108282

(56) Entgegenhaltungen:
- WO-A1-2010/076332
- DE-A1-102009 017 404
- DE-A1-102010 011 767
- DE-A1-102010 060 364

## Beschreibung

Die vorliegende Erfindung betrifft ein System für ein Fahrzeug zur Auslösung wenigstens einer Funktion einer Sicherheitsvorrichtung gemäß Anspruch 1. Weiterhin betrifft die Erfindung ein Verfahren zur Auslösung wenigstens einer Funktion einer Sicherheitsvorrichtung für ein Fahrzeug gemäß Anspruch 8.

Aus dem Stand der Technik ist es bekannt, dass Systeme zur berührungslosen Auslösung einer Funktion einer Sicherheitsvorrichtung für ein Kraftfahrzeug genutzt werden. Dazu führt der Nutzer eines Kraftfahrzeugs einen ID-Geber (Identifikationsgeber, elektronischer Schlüssel) mit, wobei über den ID-Geber ein Funksignal aussendbar ist. Das Funksignal kann Informationen z. B. einen Sicherheitscode beinhalten, die von einer Empfangsvorrichtung, welche an dem Kraftfahrzeug angeordnet ist, empfangbar sind. Diese Informationen sind von einer Steuervorrichtung auswertbar, wobei bei einer positiven Auswertung der Informationen die Funktion der Sicherheitsvorrichtung ausgelöst werden kann. Als nachteilig hat sich jedoch herausgestellt, dass der Nutzer des Fahrzeuges die aktive Aussendung des Funksignals durch den ID-Geber beispielsweise per Kopfdruck nicht in jedem Fall vornehmen kann. So können die Hände des Nutzers des Fahrzeuges zur Bedienung des ID-Gebers blockiert sein, wie es z. B. durch ein Tragen einer Kiste durch den Nutzer mit beiden Händen der Fall sein kann. In diesem Fall ist eine Auslösung der Funktion der Sicherheitsvorrichtung durch den ID-Geber nicht möglich. Der Nutzer muss dementsprechend zur Auslösung der gewünschten Funktion die Kiste abstellen, um wenigstens eine Hand zur Betätigung des ID-Gebers nutzen zu können. Dieses führt zu Komforteinbußen bei der Auslösung der Funktion der Sicherheitsvorrichtung.

Aus den Dokumenten DE 10 2010 011 767 A1, DE 10 2010 060 364 A1, DE 10 2009 017 404 A1 sowie WO 2010/076332 A1 sind gattungsgemäße Systeme für ein Fahrzeug zur Auslösung wenigstens einer Funktion einer Sicherheitsvorrichtung bekannt.

Es ist daher Aufgabe der vorliegenden Erfindung, ein System und ein Verfahren für ein Fahrzeug zur insbesondere berührungslosen Auslösung wenigstens einer Funktion einer Sicherheitsvorrichtung zu schaffen, wobei der Komfort zur Auslösung der Funktion der Sicherheitsvorrichtung verbessert ist. Zusätzlich soll durch die Erfindung auch der Komfort zum berechtigten Zugang des Fahrzeuges erleichtert werden.

Diese Aufgabe wird durch ein System für ein Fahrzeug zur insbesondere berührungslosen Auslösung wenigstens einer Funktion einer Sicherheitsvorrichtung mit sämtlichen Merkmalen des Anspruchs 1 vorgeschlagen. Weiter wird die erfindungsgemäße Aufgabe durch ein Verfahren zur insbesondere berührungslosen Auslösung wenigstens einer Funktion einer Sicherheitsvorrichtung für ein Fahrzeug mit sämtlichen Merkmalen des Patentanspruchs 8 vorgeschlagen. In den abhängigen Ansprüchen sind bevorzugte Weiterbildungen der Erfindung ausgeführt. Merkmale und Details, die im Zusammenhang mit dem erfindungsgemäßen Verfahren beschrieben sind, gelten dabei selbstverständlich auch im Zusammenhang mit dem erfindungsgemäßen System und umgekehrt.

Die Erfindung offenbart ein System für ein Fahrzeug zur insbesondere berührungslosen Auslösung wenigstens einer Funktion einer Sicherheitsvorrichtung. Die Sicherheitsvorrichtung ist mit einer Steuervorrichtung elektrisch verbunden. Erfindungsgemäß ist hierbei vorgesehen, dass die Steuervorrichtung zumindest einen ersten kapazitiven Sensor aufweist. Durch den ersten kapazitiven Sensor ist eine erste Kapazitätsänderung durch eine Bewegung eines Objektes registrierbar und an eine Steuervorrichtung übermittelbar. Durch die erste Kapazitätsänderung ist ein erstes Bewegungsmuster des Objektes durch die Steuervorrichtung ermittelbar und auswertbar. Bei einer positiven Auswertung ist die Funktion der Sicherheitsvorrichtung auslösbar. Selbstverständlich können auch noch Zusatzinformationen notwendig sein, damit die Sicherheitsvorrichtung die Funktion der Sicherheitsvorrichtung auslöst. Durch die Bewegung des Objektes kann die Änderung der Kapazität durch den kapazitiven Sensor registriert werden, wobei diese Kapazitätsänderung an die Steuervorrichtung übermittelt wird. Je näher das Objekt an dem kapazitiven Sensor ist, desto höher ist die Kapazitätsänderung. Dieses bedeutet, dass die Kapazität sich in Abhängigkeit der Objektbewegungen ändern kann. Dementsprechend kann z. B. eine periodische Kapazitätsänderung durch den ersten Sensor registriert werden. Dieses kann dadurch erreicht werden, dass das Objekt sich im Wechsel dem kapazitiven Sensor nähert und wieder entfernt. So wäre eine sinusförmige Kapazitätsänderung durch z. B. eine Pendelbewegung des Objekts möglich. In dem Falle, dass das Objekt ein Körper oder eine Extremität des Körpers, wie beispielsweise ein Bein oder Arm, eines Menschen ist, kann über den Körper des Objekts eine Kapazitätsänderung hervorgerufen werden. So ist es denkbar, dass der Körper für eine gewisse Zeit stationär vor dem kapazitiven Sensor verharrt, so dass die Steuervorrichtung eine gleichbleibende Kapazität registriert. Nach einer bestimmten Zeit der Verharrung des Körpers kann dann eine Extremität des Körpers, z. B. ein Bein oder ein Fuß, eine Schwenkbewegung ausführen. In diesem Fall ändert sich die registrierte Kapazität des Sensors. Damit ergibt sich zeitlich gesehen eine gleichbleibende erfasste Kapazität durch die Steuervorrichtung über ein gewisses Zeitfenster (beim Verharren), bis zu dem Zeitpunkt, bei welchem der Nutzer das Bein verschwenkt (im Bewegungszustand). An dieser Stelle registriert die Steuervorrichtung eine Kapazitätsänderung über die Zeit, die sinusförmig ausgebildet sein kann, wenn der Nutzer z. B. das Bein in einer Pendelbewegung verschwenkt. Dieses Bewegungsmuster, d. h. Annäherung an den kapazitiven Sensor mit einer bestimmten Ruhephase des Körpers, und einer anschließenden bestimmten Schwenkbewegung des Beines, bildet ein bestimmtes Bewegungsmuster des Objekts. Dieses Bewegungsmuster wird dementsprechend durch die entsprechende zeitliche Kapazitätsänderung erkannt, wobei die Steuervorrichtung diese Bewegungsmuster anhand der zeitlich zugeordneten Kapazitätsänderungen auswerten kann. Die Auswertung des Bewegungsmusters erfolgt durch einen Vergleich der gemessenen Kapazitätsänderung mit wenigstens einer gespeicherten Kapazitätsänderung, die einem vordefinierten Bewegungsmuster entspricht, welche in einem an der Steuereinheit angeordneten Speicher gespeichert sein können. Im Falle, dass dieses bestimmte Bewegungsmuster einem vorgegebenen Bewegungsmuster, welches in der Steuervorrichtung als Kapazitätsänderung gespeichert ist, übereinstimmt, kann die Funktion der Sicherheitsvorrichtung ausgelöst werden.

Grundsätzlich soll im vorliegenden Text unter dem Vergleich des erfassten Bewegungsmusters mit einem gespeicherten Bewegungsmuster durch die Steuereinheit verstanden werden, dass die Steuereinheit tatsächlich eine gemessene Kapazitätsänderung bzw. deren zeitlichen Verlauf eines erfassten Bewegungsmusters mit einer gespeicherten Kapazitätsänderung bzw. deren zeitlichen Verlauf eines oder mehrerer vordefinierten Bewegungsmusters über eine definierte Zeitspanne vergleicht und/oder entsprechend auswertet, wobei insbesondere spezielle Auswertefunktionen, Auswertealgorithmen und/oder Auswertemittel sowie Kennwerte anwendbar sind. Sofern bei einem derartigen Vergleich durch die Steuereinheit eine gemessene Kapazitätsänderung eines erfassten Bewegungsmusters mit einer gespeicherten Kapazitätsänderung eines vordefinierten Bewegungsmusters im Wesentlichen gleicht oder zumindest sehr ähnlich ist, findet eine positive Auswertung und damit ein positiver Vergleich statt. Für diesen Vergleich kann eine spezielle Auswertefunktion, Auswertealgorithmus, Auswertemittel und/oder Kennwerte herangezogen werden. Hierdurch kann beispielsweise eine aktive Betätigung des ID-Gebers durch eine Person unterbleiben und dennoch eine gewünschte Funktion der Sicherheitsvorrichtung ausgelöst werden, wenn diese bei einem positiven Vergleich ein vordefiniertes Bewegungsmuster der Person ermittelt. Damit kann der Komfort zum Auslösen der Funktion deutlich verbessert werden.

Somit ist es denkbar, dass bei einem positiven Vergleich des erfassten Bewegungsmusters mit einem gespeicherten Bewegungsmuster durch die Steuereinheit zunächst eine drahtlose Kommunikationsverbindung mit dem ID-Geber als Funktion ausgelöst wird. Hierbei kann das erfasste und vordefinierte Bewegungsmuster auch nur aus einer bloßen Annäherung der Person an den ersten Sensor bestehen. Die ausgelöste, drahtlose Kommunikationsverbindung ermöglicht eine Authentifizierung des Benutzers des Fahrzeugs. Dazu kann ein Berechtigungscode von dem ID-Geber ausgesendet werden, der von einer Empfangsvorrichtung, welche in einem Fahrzeug angeordnet sein kann, empfangen und ausgewertet werden kann. Dazu können z. B. in der Steuervorrichtung bestimmte Berechtigungscodes hinterlegt sein, die mit dem übermittelten Berechtigungscode vom ID-Geber verglichen werden können. Im Falle eines positiven Vergleichs der Berechtigungscodes und einer positiven Auswertung des erfassten Bewegungsmusters durch den kapazitiven Sensor mit einem gespeicherten Bewegungsmuster in der Steuervorrichtung kann ggf. eine weitere Funktion durch die Sicherheitsvorrichtung ausgelöst werden. Hierbei kann beispielsweise ein Öffnungs- und Schließmechanismus von einem Kofferraumdeckel des Fahrzeuges angesteuert werden, um diesen automatisch zu öffnen. Damit wird wirkungsvoll verhindert, dass unberechtigte Nutzer des Fahrzeugs durch eine Kenntnis des bestimmten Bewegungsmusters die Funktion der Sicherheitsvorrichtung unberechtigt auslösen können, da der Berechtigungscode vom ID-Geber fehlt.

Erfindungsgemäß ist es denkbar, dass diverse unterschiedliche Bewegungsmuster bzw. die entsprechenden Kapazitätsänderung bzw. deren Verläufe über die Zeit in dem Speicher der Steuervorrichtung hinterlegt sind, die bei einem positiven Vergleich mit erfassten Bewegungsmuster, welches durch den ersten und/oder zweiten Sensor gemessen worden ist, zu einer Auslösung einer Funktion führen. Dabei können auch unterschiedliche Funktionen je nach erkanntem Bewegungsmuster (nach dem Vergleich bzw. der Auswertung) durch die Steuereinheit ausgelöst werden. Beispielsweise führt die Erkennung einer Annäherung eines Objektes an den ersten und/oder einen zweiten Sensor zu einem Starten der Kommunikation mit einem ID-Geber. Eine anschließende Kick-Bewegung durch ein Bein der Person kann einen Öffnungsvorgang von einer Tür oder Klappe auslösen. Somit ist es auch denkbar, dass die zeitliche Reihenfolge der erkannten Bewegungsmuster ebenfalls maßgeblich ist, um eine oder mehrere Funktionen gleichzeitig und/oder in zeitlicher Folge auszulösen.

Es ist im Rahmen ferner vorgesehen, dass zumindest ein zweiter kapazitiver Sensor an derselben Steuervorrichtung angeordnet ist, wobei durch den zweiten kapazitiven Sensor eine zweite Kapazitätsänderung durch die Bewegung des Objekts registrierbar ist, wobei durch die Registrierung der ersten und der zweiten Kapazitätsänderung ein differenziertes Bewegungsmuster des Objekts durch die Steuervorrichtung ermittelbar ist. Durch die Nutzung eines zweiten kapazitiven Sensors kann ein größerer Bereich erfasst und detektiert werden, wobei messtechnisch erfassbar ist, dass das Bewegungsmuster an verschiedenen Orten stattfindet. Dabei ist es denkbar, dass mehrere zweite kapazitive Sensoren an einer Außenhülle des Fahrzeugs angebracht sind. Damit kann der gesamte Bereich um das Fahrzeug durch den ersten kapazitiven Sensor und den zweiten kapazitiven Sensor erfasst werden. Damit kann das Objekt, welches sich beispielsweise um das Fahrzeug bewegt, durch die Sensoren flächendeckend im Außenbereich des Fahrzeuges erfasst und registriert werden.

Erfindungsgemäß ist es vorteilhaft, dass der erste Sensor und der zweite Sensor im Wesentlichen horizontal am Fahrzeug angeordnet sind. Durch die horizontale Anordnung kann ein Vorbeiführen des Objekts an dem Kraftfahrzeug sicher durch den ersten und den zweiten Sensor registriert werden. Damit kann die Steuervorrichtung die Bewegungsrichtung des Objekts erfassen. Die Steuervorrichtung kann dadurch ein differenziertes Bewegungsmuster des Objekts ermitteln, wodurch eine Fehlauslösung der Funktion wirkungsvoll verhindert werden kann.

Weiterhin ist es erfindungsgemäß vorgesehen, dass der erste Sensor und/oder der zweite Sensor als Elektrodenpaar mit einer ersten Elektrode und einer zweiten Elektrode ausgebildet ist, die insbesondere jeweils getrennt voneinander eine Kapazitätsänderung messtechnisch erfassen können. Somit kann zumindest ein Sensor zwei unterschiedliche Messdaten aufgrund der jeweils von den Elektroden gemessenen Kapazitätsänderung liefern. Zwischen der ersten und der zweiten Elektrode kann sich eventuell auch ein elektrisches Feld ausbilden. Grundsätzlich kann ein typisches Bewegungsmuster in Form der resultierenden Kapazitätsänderung von der ersten und zweiten Elektrode durch die Bewegung des Objekts messtechnisch erfasst werden. Die erste und die zweite Elektrode können dabei drahtartig oder folienartig ausgebildet werden, wobei der Draht oder die Folie die erste und/oder die zweite Elektrode des kapazitiven Sensors bilden. Vorzugsweise kann sich die drahtartige oder folienartige Elektrode über einen Teil oder bevorzugt über die gesamte Breite eines Stoßfängers bzw. einer Breite einer Seitentür des Fahrzeugs erstrecken. Die Elektroden können Bestandteil des hinteren Stoßfängers, der Seitentür oder des Türschwellers sein oder innenseitig in diesem aufgeklebt oder mit Befestigungsmitteln befestigt sein. Ferner können die Elektroden in einem Spritz-Guss-Verfahren zur Herstellung des Stoßfängers bereits verarbeitet werden. Der erste Sensor und/oder der zweite Sensor kann innerhalb des Stoßfängers, der Seitentür oder des Türschwellers räumlich angeordnet werden.

Zudem ist es vorteilhaft, dass durch die erste Elektrode und die zweite Elektrode unabhängig voneinander eine Kapazitätsänderung erfassbar ist. Im Falle, dass zumindest eine Elektrode elektromagnetisch abgeschirmt wird, z. B. durch ein metallisches Objekt, kann die zweite Elektrode unabhängig von der ersten Elektrode eine Kapazitätsänderung erfassen. Dabei kann die erste Elektrode oberhalb der zweiten Elektrode angeordnet sein. Aber auch eine senkrechte Anordnung der ersten und der zweiten Elektrode sind dabei denkbar. So kann es z. B. sein, dass eine Schiebetür des Fahrzeugs sich im Falle der Türverschiebung die erste Elektrode elektromagnetisch abschirmt. Damit ist es dieser ersten Elektrode nicht mehr möglich, eine Kapazitätsänderung durch eine Bewegung eines Objekts messtechnisch wahrzunehmen. Die zweite Elektrode, die sich unterhalb der ersten Elektrode befindet, kann dann weiterhin die Kapazitätsänderung, verursacht durch die Bewegung des Objekts, registrieren. Damit kann eine Ausfallsicherheit des ersten Sensors erhöht werden.

Im Rahmen der Erfindung ist es besonders vorteilhaft, wenn zumindest der erste und der zweite Sensor an derselben Steuervorrichtung elektrisch angeordnet ist, damit direkt (ohne zeitliche Verzögerung) eine gemeinsame messtechnische Auswertung der vorhandenen Sensoren stattfinden kann. Außerdem kann somit der steuerungstechnische Aufwand und somit die Kosten hierfür bei einer gemeinsamen Steuervorrichtung reduziert werden. Ferner können Fehlauslösungen der Steuervorrichtung zuverlässiger vermieden werden, da zusätzliche messtechnische Information von dem zweiten Sensor direkt vorliegen. Auch ist es im Rahmen der Erfindung vorgesehen, dass der erste Sensor an einem Heckbereich, insbesondere an einem Stoßfänger, des Fahrzeugs und der zweite Sensor an einer Seite des Fahrzeugs angeordnet ist. Durch die Anordnung des ersten Sensors am Heckbereich des Fahrzeugs können Bewegungen des Objekts an einem hinteren Freifeld des Fahrzeugs durch den ersten Sensor detektiert werden. Der Sensor kann eine erste und eine zweite Elektrode aufweisen, wobei die erste Elektrode oberhalb der zweiten Elektrode anordbar ist.

Die erste Elektrode und/oder zweite Elektrode kann dabei drahtartig oder folienartig ausgebildet sein, wobei die erste und/oder zweite Elektrode horizontal über eine gesamte Breite des Fahrzeughecks angeordnet sein können. Der zweite Sensor, der ebenfalls eine erste und eine zweite Elektrode aufweisen kann, ist dabei an der Fahrzeugseite angeordnet. Die erste und/oder zweite Elektrode kann dabei horizontal über die gesamte Fahrzeugseite, z. B. in einem Türschweller, angeordnet sein. Je größer die Fläche der ersten und/oder zweiten Sensorelektrode ist, desto größer ist ein Detektionsbereich, der durch die erste und/oder zweite Elektrode detektiert werden kann. Durch den ersten und zweiten Sensor können dementsprechend zwei getrennt voneinander verschiedene Detektionsbereiche geschaffen werden. Der Detektionsbereich des ersten Sensors überwacht dementsprechend im Wesentlichen den Außenbereich am Fahrzeugheck und der zweite Sensor im Wesentlichen den Außenbereich an der Fahrzeugseite. Dementsprechend kann das gesamte Fahrzeugheck und die Seite des Fahrzeugs detektiert werden. Nähert sich ein Objekt dem Heck des Kraftfahrzeugs, so registriert der erste Sensor an dem Fahrzeugheck eine Kapazitätsänderung. Bewegt sich das Objekt von dem Fahrzeugheck zur Fahrzeugseite so registriert auch der zweite Sensor eine Kapazitätsänderung. Da der erste Sensor und der zweite Sensor mit derselben Steuervorrichtung verbunden sind, kann die Steuervorrichtung nicht nur eine Annäherung des Objekts detektieren, sondern auch detektieren, aus welcher Richtung sich das Objekt dem Fahrzeug nähert. So kann die Steuervorrichtung eindeutig bestimmen, ob das Objekt von der Heckseite des Fahrzeugs auf das Fahrzeug zukommt oder von der Fahrzeugseite. Dadurch, dass der erste und der zweite Sensor mit einem Steuergerät verbunden sind, kann für den Außenbereich des Fahrzeughecks und den Außenbereich der Fahrzeugseite ein differenziertes Bewegungsmuster des Objekts durch die Steuervorrichtung erfasst werden. Dabei ist es denkbar, dass an einer Fahrzeugfront ein dritter Sensor angeordnet ist und/oder an einer zweiten Fahrzeugseite ein vierter Sensor angeordnet ist. Der dritte und/oder vierte Sensor kann ebenfalls mit demselben Steuergerät verbunden sein, mit dem bereits der erste und der zweite Sensor verbunden sind. Dadurch kann der gesamte Außenbereich des Fahrzeugs durch genau eine Steuervorrichtung überwacht werden. Der dritte und/oder vierte Sensor kann dabei ebenfalls als kapazitiver Sensor ausgebildet sein.

Des Weiteren kann es erfindungsgemäß vorgesehen sein, dass die Steuervorrichtung, an der zumindest der erste und zweite kapazitive Sensor elektrisch verbunden angeordnet sind, im Fahrzeug im Trockenbereich, d. h. z. B. im Fahrgastraum oder im Kofferraum, angeordnet sind. Somit kann vermieden werden, dass die Steuervorrichtung direkt den äußeren Umwelteinflüssen ausgesetzt wird. Folglich ist es ausreichend, wenn ausschließlich die Messelektroden der angeschlossenen Sensoren der Steuervorrichtung im sensitiven Bereich des Fahrzeugs vorgesehen ist. Diese Sensoren können dann über eine Zuleitung mit der Steuereinheit elektrisch verbunden sein. Zweckmäßigerweise kann die Zuleitung mit einer Abschirmung versehen sein, die um jede einzelne Ader oder um alle elektrischen Adern gemeinsam der Zuleitung im Querschnitt umhüllend verläuft. Hierzu kann z. B. ein koaxiales Leitungskabel verwendet werden, wobei der Abschirmungsmantel außen angeordnet ist und die Zuleitung für die Sensoren innerhalb des Abschirmungsmantels angeordnet sind. Hierbei ist es auch denkbar, dass die Abschirmung elektrisch leitend mit der Fahrzeugmasse verbunden ist, so dass die Abschirmung keine Potentialdifferenz zur Fahrzeugmasse aufweist. Durch die vorgesehene Abschirmung können äußere elektromagnetische Störfelder sowie kapazitive Störeinflüsse, die sich negativ auf die kapazitive Messung auswirken, sicher vermieden werden. Idealerweise ragt die Abschirmung bei der Zuleitung vom Steuergerät bis wenige mm vor die eigentlichen Messelektroden der kapazitiven Sensoren. Durch die vorgesehene Abschirmung kann somit die Steuereinheit auch räumlich weiter entfernt von den eigentlichen kapazitiven Sensoren im Fahrzeug angeordnet werden, ohne jedoch die Messgenauigkeit negativ zu beeinflussen. Außerdem erleichtert es technisch den Einsatz von genau einem Steuergerät für eine Vielzahl von kapazitiven Sensoren, wobei zumindest ein erster und ein zweiter kapazitiver Sensor vorgesehen sein kann. Selbstverständlich können bei dieser Ausgestaltung des erfindungsgemäßen Systems auch weitere kapazitive Sensoren an derselben Steuervorrichtung angeordnet werden.

Ferner ist zu erwähnen, dass auch jeweils ein kapazitiver Sensor mit einem zusätzlichen Abschirmmittel versehen werden kann, wodurch das Messfeld des jeweiligen kapazitiven Sensors speziell auf den Detektions- bzw. Messbereich ausgerichtet werden kann. Dieses Abschirmmittel kann als eine Folie oder Draht hinter der Messeelektrode des jeweiligen Sensors angeordnet sein und kann zusätzlich elektrisch leitend mit der Abschirmung der Zuleitung verbunden werden. Auch ist es denkbar, dass das Abschirmmittel direkt mit der Fahrzeugmasse elektrisch leitend verbunden ist. Das zuvor erwähnte Abschirmmittel kann bei jeder Messelektrode des kapazitiven Sensors vorgesehen sein. Auch kann ein gemeinsames Abschirmmittel für beide Messelektroden des jeweiligen Sensors vorgesehen sein. Ebenfalls ist es denkbar, dass dieses Abschirmmittel schaltungstechnisch durch die Steuervorrichtung mit der Fahrzeugmasse elektrisch leitend geschaltet werden kann oder als dritte Messelektrode zum Einsatz kommen kann. Dieses Abschirmmittel kann z. B. U-förmig oder bogenförmig ausgestaltet sein, wobei die eigentliche Messeelektrode zwischen dem Detektionsbereich und dem Abschirmmittel angeordnet ist.

Ferner ist es erfindungsgemäß denkbar, dass zu den Messelektroden des jeweiligen kapazitiven Sensors auch eine Ausgleichselektrode zum Einsatz kommt, um z. B. äußere Veränderungen des Detektionsbereichs, die durch z. B. Witterungseinflüsse bestimmt sind, erfassen zu können. So wirkt sich gerade Feuchtigkeit im Detektionsbereich der Sensoren wesentlich auf das Messergebnis aus, um diese Messänderung jedoch richtig interpretieren zu können, kann die zusätzliche Ausgleichselektrode vorgesehen sein.

Gemäß einer vorteilhaften Weiterbildung des erfindungsgemäßen Systems ist es vorgesehen, dass die Steuervorrichtung mit einem Feldbus, insbesondere einem CAN-Bus bzw. LIN-Bus, verbunden ist. Ein Feldbus kann Informationen über zwei Leitungen übertragen. Die Steuervorrichtung kann über den Feldbus gesteuert werden. Informationen über ermittelte Bewegungsmuster, die von der Steuervorrichtung erfasst worden sind, können über den Feldbus an ein weiteres Steuergerät im Fahrzeug gesendet werden. Damit können die angeschlossenen Steuergeräte über den Feldbus untereinander Daten austauschen. Auch kann eine zentrale Rechnereinheit zum Einsatz kommen, die die Daten der erkannten Bewegungsmuster von dem Feldbus empfängt. Zudem kann die zentrale Rechnereinheit über den Feldbus Daten zur Steuervorrichtung senden. Dies kann im einfachsten Falle das Ein- und Ausschalten der kapazitiven Sensoren, welche an der Steuervorrichtung angeschlossen sind, sein. Durch Einsatz eines Feldbusses in einem Fahrzeug, kann der Verkabelungsaufwand innerhalb des Fahrzeugs erheblich reduziert werden. Des Weiteren können weitere Steuergeräte an dem Feldbus angeschlossen werden, wobei alle Steuergeräte untereinander über den Feldbus Daten austauschen können. Bei einem Ausfall eines Steuergeräts ist dementsprechend nicht die Funktionalität der verbleibenden funktionstüchtigen Steuergeräte beeinträchtigt.

Optional ist es denkbar, dass die Sicherheitsvorrichtung eine Entriegelungsvorrichtung zur Entriegelung einer Fahrzeugtür und/oder Öffnungsvorrichtung einer Fahrzeugtür aufweist.

Die Entriegelungsvorrichtung kann dabei elektrisch oder elektromechanisch ausgebildet sein. Eine elektrische Entriegelungsvorrichtung kann dabei ein Elektromagnet sein, welcher durch eine Bestromung ein Magnetfeld aufbauen kann, wodurch eine Fahrzeugtür verriegelt werden kann. Eine elektromagnetische Sicherheitsvorrichtung kann dabei ein Hubmagnet sein. Ein Metallelement kann dabei in einer Spule eines Elektromagneten eingelassen werden, wobei durch eine Bestromung der Spule der Elektromagnet in das Innere der Spule gezogen werden kann. Das Metallelement kann dabei eine erste und eine zweite Seite aufweisen, wobei die erste Seite in die Spule des Elektromagneten eingesetzt werden kann. Die zweite Seite kann einen Haken aufweisen, der an einem Bowdenzug befestigt sein kann. Bei einer Bestromung des Hubmagneten mit elektrischem Strom, kann das Metallelement in den Elektromagneten hinein bewegt werden, so dass der Bowdenzug in seiner Längsrichtung bewegbar ist. An einem zweiten Ende des Bowdenzugs kann eine mechanische Entriegelungsvorrichtung angeordnet sein. Es ist auch denkbar, dass der Haken an dem zweiten Ende des Metallelements direkt an der mechanischen Entriegelungsvorrichtung angeordnet ist. Weiterhin ist es denkbar, dass die Sicherheitsvorrichtung eine Öffnungsvorrichtung für eine Fahrzeugtür umfasst, wobei die Öffnungsvorrichtung einen Elektromotor aufweisen kann. Durch den Elektromotor kann eine Öffnung der Fahrzeugtür erfolgen. Der Elektromotor kann ein Getriebe aufweisen, wodurch eine Erhöhung des Drehmoments erreicht werden kann. Da die Sicherheitsvorrichtung mit der Steuervorrichtung verbunden ist, können alle Aktionen der Sicherheitsvorrichtung durch die Steuervorrichtung gesteuert werden. Die Sicherheitsvorrichtung kann dabei ebenfalls ein elektrischer Fensterheber sein. Auch ist es denkbar, dass die Sicherheitsvorrichtung eine elektrische Wegfahrsperre ist. Damit können viele elektrische Funktionselemente in dem Fahrzeug durch die Steuervorrichtung gesteuert werden.

Weiterhin ist es vorteilhaft, dass die Öffnungsvorrichtung einen elektromechanischen Antrieb aufweist, wobei durch den elektromechanischen Antrieb eine Fahrzeugtür bewegbar ist. Der elektromechanische Antrieb kann durch die Steuervorrichtung gesteuert werden. Dabei kann der elektromechanische Antrieb einen Elektromotor aufweisen, wodurch die Fahrzeugtür bewegbar ist. Vorteilhafterweise ist an dem Elektromotor ein Getriebe angeordnet, wodurch eine Erhöhung des Drehmoments erreicht werden kann. Dadurch können massereiche Fahrzeugtüren bewegt werden. Auch ist es denkbar, dass der Elektromotor eine Schiebevorrichtung antreiben kann, an der eine Kraftfahrzeugtür angeordnet ist. Durch die Schiebevorrichtung kann die Kraftfahrzeugtür über ein Schienensystem an einer Außenseite des Fahrzeugs bewegt werden. Dadurch lassen sich Fahrzeugtüren über eine Achse elektromechanisch verschwenken oder über ein Schienensystem verschieben.

Als vorteilhaft hat sich erwiesen, dass die Steuervorrichtung eine Rechnereinheit aufweist, wobei durch die Rechnereinheit, der Kapazitätsänderung des ersten Sensors und der Kapazitätsänderung des zweiten Sensors ein Kennwert zuordbar ist. Die Zuordnung eines Kennwerts ermöglicht es, dass Kapazitätsänderungen über die Zeit in einem einzigen Kennwert zusammengefasst werden können. Dabei kann zunächst die Kapazitätsänderung, die durch den ersten Sensor erfasst werden kann, in einem ersten Kennwert zusammengefasst werden und die Kapazitätsänderungen, welche durch den zweiten Sensor erfasst sind, zu einem zweiten Kennwert erfasst werden. Dabei kann der erste Kennwert und der zweite Kennwert zu einem Kennwert vereint werden. Dadurch wird es ermöglicht, bestimmte Bewegungsmuster in Kennwerten abzubilden. Damit gibt ein Kennwert ein ganz bestimmtes Bewegungsmuster an. So ist es z. B. denkbar, dass die Kapazitätsänderung über die Zeit in Zeitfenster eingeteilt wird, wobei jedes Zeitfenster eine bestimmte Kapazität angibt und die einzelnen Kapazitäten der Zeitfenster kumuliert werden. Die Länge der Zeitfenster kann dabei festgelegt werden. So kann z. B. eine Länge eines Zeitfensters im Millisekundenbereich liegen, z. B. bei 200 ms, oder auch im Sekundenbereich, z. B. die Länge eines Zeitfensters von 2 s. Die Rechnereinheit kann dabei einen nicht flüchtigen Speicher aufweisen, wobei in dem nicht flüchtigen Speicher wenigstens ein Kennwert für ein bestimmtes Bewegungsmuster speicherbar ist. Durch einen Vergleich zwischen dem Kennwert des erfassten Bewegungsmusters und dem gespeicherten Kennwert ist sicher und einfach das Bewegungsmuster des Objekts ermittelbar.

Die erfindungsgemäße Aufgabe wird ebenfalls gelöst durch ein Verfahren zur Auslösung wenigstens einer Funktion einer Sicherheitsvorrichtung für ein Fahrzeug, gemäß dem Patentanspruch 8, wobei die Sicherheitsvorrichtung mit einer Steuervorrichtung elektrisch verbunden ist. Dazu ist erfindungsgemäß vorgesehen, dass die Steuervorrichtung einen ersten kapazitiven Sensor aufweist, wobei durch den ersten kapazitiven Sensor eine erste Kapazitätsänderung durch eine Bewegung eines Objektes registriert und an die Steuervorrichtung übermittelt wird. Durch die erste Kapazitätsänderung wird ein erstes Bewegungsmuster des Objektes durch die Steuervorrichtung ermittelt und ausgewertet. Bei einer positiven Auswertung wird die Funktion der Sicherheitsvorrichtung ausgelöst.

Ferner ist es vorgesehen, dass ein zweiter kapazitiver Sensor an der Steuervorrichtung angeordnet ist, wobei durch den zweiten kapazitiven Sensor eine zweite Kapazitätsänderung durch die Bewegung des Objekts registriert wird, wobei durch die Registrierung der ersten und der zweiten Kapazitätsänderung ein differenziertes Bewegungsmuster des Objekts ermittelt wird. Durch das erfindungsgemäße Verfahren können Bewegungsmuster verschiedenster Objekte an verschiedenen Orten registriert bzw. detektiert werden. Objekte können dabei z. B. Personen oder Gegenstände sein. Bei Personen können komplexe Bewegungen durch Extremitäten erzeugt werden. Diese komplexen Bewegungsabläufe können durch den Einsatz von mindestens zwei Sensoren, die direkt mit der Steuervorrichtung verbunden sind, erfasst werden. Der erste Sensor und der zweite Sensor können an verschiedenen Bereichen der Außenhülle des Fahrzeugs angeordnet sein. So ist es denkbar, dass der erste Sensor an einem Fahrzeugheck angeordnet ist und der zweite Sensor an einer Fahrzeugseite. Im Falle, dass das Objekt eine Person ist, kann die Steuervorrichtung detektieren, von welcher Seite aus die Person sich dem Fahrzeug nähert. Dies ist wichtig, um bestimmte Bewegungsmuster sicher erkennen zu können und Fehlauslösungen zu vermeiden. Im Falle, dass durch eine Kickbewegung des Fußes, welche an dem Fahrzeugheck durch den Nutzer des Fahrzeugs ausgeführt wird, die Funktion der Sicherheitsvorrichtung sicher ausgelöst werden soll, kann der zweite Sensor, welcher sich an der Fahrzeugseite befindet, dazu beitragen, dass diese Kickbewegung nur an der Sicherheitsvorrichtung an dem Fahrzeugheck ausgelöst wird. Dabei ist es denkbar, dass an der Steuervorrichtung mehrere Sensoren angeschlossen sind. So weist das Fahrzeug eine erste Fahrzeugseite und eine zweite Fahrzeugseite, eine Fahrzeugfront und ein Fahrzeugheck auf. Dementsprechend können vier Sensoren zum Einsatz kommen, wobei ein Sensor an dem Fahrzeugheck, ein Sensor an der ersten Fahrzeugseite, ein Sensor an der zweiten Fahrzeugseite und ein Sensor an der Fahrzeugfront angeordnet sein kann. Alle vier Sensoren können direkt mit derselben Steuervorrichtung verbunden sein. Dementsprechend kann der gesamte Außenbereich des Fahrzeugs durch die Steuervorrichtung und die angeschlossenen Sensoren überwacht werden. Jede Annäherung des Objekts an das Fahrzeug wird dementsprechend durch die Sensoren und nachfolgend der Steuervorrichtung registriert.

Es hat sich als vorteilhaft erwiesen, dass der ersten und/oder zweiten Kapazitätsänderung eine Kennlinie, insbesondere ein Kennwert zugeordnet wird. Die Zuordnung der Kennlinie kann durch eine Rechnereinheit erfolgen, welche an der Steuereinheit angeordnet ist. Die Kennlinie kann ein eindeutiges Bewegungsmuster wiederspiegeln. Durch Auswertung der Kennlinie durch die Rechnereinheit kann der Kennlinie ein Bewegungsmuster zugeordnet werden. Weiterhin ist es denkbar, dass der ersten und zweiten Kapazitätsänderung ein Kennwert zugeordnet wird. Ein Kennwert kann einfach mit gespeicherten Kennwerten, welche in der Rechnereinheit gespeichert sein können, verglichen werden. Dadurch kann die Rechenkapazität der Rechnereinheit gering gehalten werden, was sich vorteilhaft auf die Herstellungskosten der Steuervorrichtung auswirkt.

Erfindungsgemäß kann das Verfahren derart weitergebildet sein, dass eine Gewichtung zwischen der ersten Kapazitätsänderung und/oder der zweiten Kapazitätsänderung erfolgt. Es ist denkbar, dass das Objekt mit seinen Bewegungen sich im Wesentlichen in der Nähe des ersten oder des zweiten Sensors bewegt. Da der erste Sensor und der zweite Sensor an der Steuervorrichtung angeschlossen sind, registrieren beide Sensoren eine Kapazitätsänderung. Da sich das Objekt allerdings nur im Bereich des ersten Sensors bewegt, wird an dem ersten Sensor eine höhere Kapazitätsänderung wahrgenommen als an dem zweiten Sensor. Um Erfassungsfehler, welche an dem zweiten Sensor auftreten können, erfolgreich auszublenden, kann die Kapazitätsänderung des ersten Sensors stärker gewichtet werden als die zweite Änderung. Dementsprechend kann die Gewichtung als eine Filterung angesehen werden.

Es ist vorteilhaft, dass die Registrierung der ersten Kapazitätsänderung und/oder der zweiten Kapazitätsänderung ab einer bestimmten Kapazitätsschwelle erfolgt. Die erfasste Kapazität des ersten oder des zweiten Sensors kann ein bestimmtes Rauschen beinhalten. Dieses Rauschen kann selber durch den Aufbau der Sensoren verursacht werden oder auch durch Umwelteinflüsse, welche sich im Außenbereich der Sensoren ergeben können. Da diese Kapazitätsänderungen die eigentliche Erfassung der Kapazitätsänderungen durch den ersten und den zweiten Sensor bei einer Bewegung des Objekts verfälschen können, kann eine Kapazitätsschwelle festgelegt werden, ab welcher die Registrierung der Kapazitätsänderungen erfolgt. Da die Auffassung von Kapazitätsänderungen im femtofarad-Bereich bzw. picofarad-Bereich erfolgen können (fF-Bereich oder pF-Bereich) ist der Einsatz einer Kapazitätsschwelle sinnvoll. Auch ist es denkbar, dass nur bestimmte Kapazitätsspitzen erfasst werden, so dass durch Kapazitätsspitzen ein bestimmtes Bewegungsmuster erfasst werden kann.

Die vorliegende Erfindung ist auch auf ein Fahrzeug, insbesondere Kraftfahrzeug mit dem erfindungsgemäßen System zur Auslösung wenigstens einer Funktion einer Sicherheitsvorrichtung gerichtet.

Weitere Maßnahmen und Vorteile der Erfindung ergeben sich aus den Ansprüchen, der nachfolgenden Beschreibung und den Zeichnungen. In den Zeichnungen ist die Erfindung in mehreren Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Ansicht des erfindungsgemäßen Systems bei einem Fahrzeug mit einem ersten und einem zweiten Sensor,
- Figur 2: eine schematische Ansicht eines Systems bei einem Fahrzeug mit einem ersten und einem zweiten Sensor, wobei der erste und der zweite Sensor als Elektrodenpaar ausgebildet ist,
- Figur 3: ein Ablaufdiagramm des erfindungsgemäßen Verfahrens,
- Figur 4: schematisch ein Ablaufdiagramm, welches das Ablaufdiagramm in Figur 3 weiterbildet und
- Figur 5: eine schematische Darstellung des erfindungsgemäßen Systems mit der Steuervorrichtung und den angeschlossenen Sensoren.

In den Figuren sind gleiche technische Merkmale der Erfindung mit denselben Bezugszeichen versehen, sofern sie die gleiche technische Funktion haben.

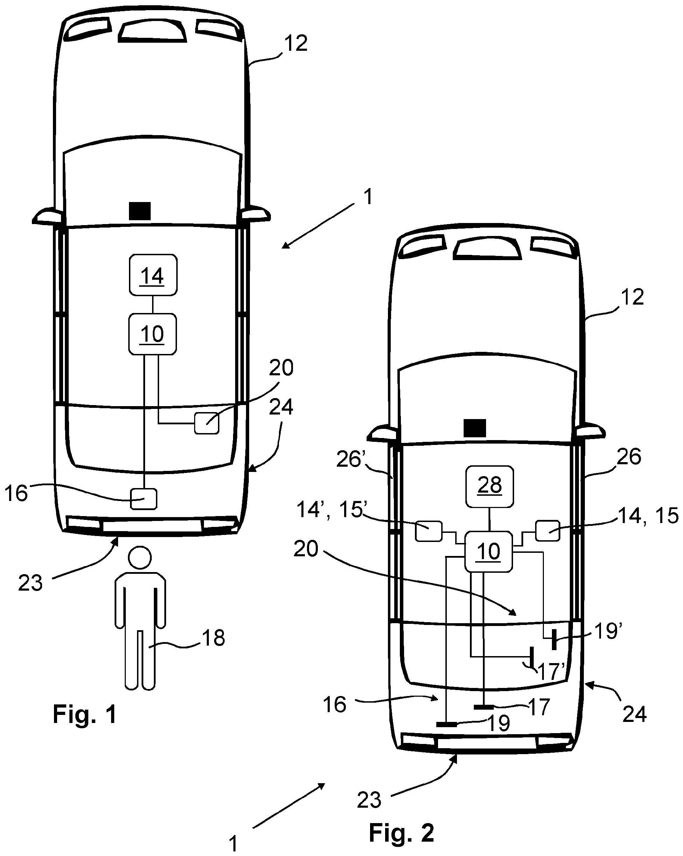

In Figur 1 ist schematisch das erfindungsgemäße System 1 mit einem ersten Sensor 16 und einem zweiten Sensor 20 für ein Fahrzeug 12 dargestellt. Der erste Sensor 16 ist an einem Fahrzeugheck 23 angeordnet. Der zweite Sensor 20 ist an einer Fahrzeugseite 24 angeordnet. Der erste Sensor 16 und der zweite Sensor 20 sind mit genau einer Steuervorrichtung 10 elektrisch verbunden. An der Steuervorrichtung 10 ist eine Sicherheitsvorrichtung 14 angeordnet. Ein Objekt 18 befindet sich z. B. im Außenbereich des Fahrzeughecks 23. Jede Bewegung des Objekts 18 verursacht eine Kapazitätsänderung des ersten Sensors 16. Die Kapazitätsänderung des ersten Sensors 16 wird dabei durch die Steuervorrichtung 10 erfasst. Durch die Bewegung des Objekts 18 registriert der zweite Sensor 20 ebenfalls eine Kapazitätsänderung. Dabei können der erste Sensor 16 und der zweite Sensor 20 baugleich ausgeführt sein. Dementsprechend registriert der erste Sensor 16 eine größere Kapazitätsänderung als der zweite Sensor 20, da das Objekt 18 näher an dem ersten Sensor 16 angeordnet ist. Allerdings kann die Steuervorrichtung 10 erkennen, dass auf jeden Fall das Objekt 18 vor dem ersten Sensor im Außenbereich des Fahrzeughecks ist, so dass die Steuervorrichtung die Registrierung der Kapazitätsänderung des zweiten Sensors 20 zu einer Eindeutigkeitsbestimmung heranziehen kann.

In Figur 2 ist schematisch das erfindungsgemäße System 1 für das Fahrzeug 12 mit einem ersten Sensor 16 und einem zweiten Sensor 20 dargestellt, wobei der erste Sensor 16 und der zweite Sensor 20 als Elektrodenpaar mit einer ersten Elektrode 17, 17' und einer zweiten Elektrode 19, 19' ausgebildet sind. Der erste Sensor 16 und der zweite Sensor 20 sind dabei mit der gleichen Steuervorrichtung 10 elektrisch verbunden. Eine Rechnereinheit 28 ist mit der Steuervorrichtung 10 ebenfalls elektrisch verbunden oder darin integriert. Durch die Rechnereinheit 28 kann z. B. einer Kapazitätsänderung des ersten 16 und/oder zweiten Sensors 20 ein Kennwert zugeordnet werden. An der Steuervorrichtung 10 ist weiterhin eine Sicherheitsvorrichtung 14, 14' angeordnet, die als Entriegelungsvorrichtung 15, 15' ausgebildet ist. Durch den ersten Sensor 16 und/oder den zweiten Sensor 20 kann ein Bewegungsmuster eines Objekts erfasst werden. Das erfasste Bewegungsmuster kann in der Steuervorrichtung 10 mit gespeicherten Bewegungsmustern verglichen und ausgewertet werden. Bei einer positiven Auswertung des erfassten Bewegungsmusters mit einem gespeicherten Bewegungsmuster kann somit die Funktion der Sicherheitsvorrichtung 14, nämlich eine Entriegelung der Fahrzeugtür 26, 26' ausgelöst werden. Die Entriegelungsvorrichtung 15, 15' kann dabei einen elektromechanischen Antrieb aufweisen, wodurch ein Entriegelungselement zum automatischen Verschließen und Entriegeln der Fahrzeugtür bewegbar ist. Ebenfalls ist es denkbar, dass es sich bei der Sicherheitsvorrichtung 14 um eine Öffnungsvorrichtung 15, 15' mit einem Elektromotor handelt, wobei durch den Elektromotor die Fahrzeugtür elektrisch verschwenkbar ist. Die Fahrzeugtür 26, 26' kann ebenfalls eine Schiebetür sein, wobei die Schiebetür über den Elektromotor verschiebbar ist.

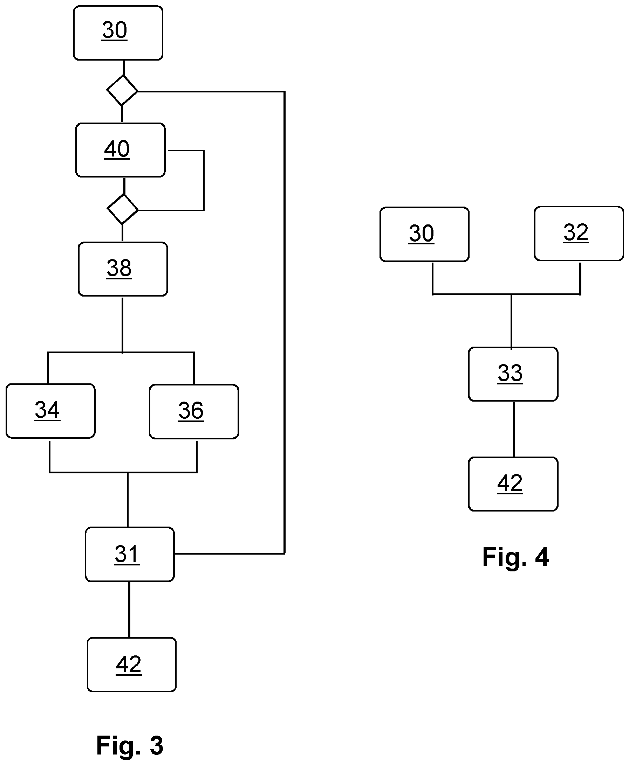

In Figur 3 ist ein Ablaufdiagramm des erfindungsgemäßen Verfahrens dargestellt. In einem ersten Verfahrensschritt 30 erfasst ein erster Sensor, verursacht durch eine Bewegung eines Objektes, eine erste Kapazitätsänderung. Die durch den ersten Sensor registrierte erste Kapazitätsänderung wird der Steuervorrichtung 10 übermittelt. Die Übermittelung kann dabei über Funk oder kabelgebunden erfolgen. Bei der Übertragung über Funk kann eine Funkleistung von 1 mW über eine Antenne genutzt werden, womit eine Reichweite von ca. 10m erreichbar sind. Zudem ist es denkbar, dass ein Verbindungsprotokoll eingesetzt wird, insbesondere ein Verbindungsprotokoll mit einer Verschlüsselung eingesetzt wird, wobei das Verbindungsprotokoll eine sichere Datenverbindung zwischen dem ersten Sensor und der Steuervorrichtung 10 ermöglichen kann. Ein zusätzlicher Verkabelungsaufwand in einem Bauraum des Fahrzeuges 12 kann dadurch unterbleiben, was sich günstig auf die Herstellungskosten des Fahrzeuges auswirkt. Eine kabelgebundene Verbindung bietet den Vorteil, dass der Datenaustausch störsicher über ein Kabel übertragen wird. Zur Verbesserung der Störsicherheit vor elektromagnetischer Störstrahlung kann das Kabel zwischen dem ersten Sensor und der Steuervorrichtung abgeschirmt sein. Ansonsten kann die Steuervorrichtung 10 in einem Verfahrensschritt 31 ein erstes Bewegungsmuster aus der Kapazitätsänderung ermitteln und auswerten. Sodann kann in einem Verfahrensschritt 42 bei einer positiven Auswertung die Funktion der Sicherheitsvorrichtung 14 ausgelöst werden.

Es kann aber auch vorgesehen sein, dass nach dem Verfahrensschritt 30 in einem Verfahrensschritt 40 die Steuervorrichtung 10 die erste Kapazitätsänderung mit einer Kapazitätsschwelle vergleicht. Damit werden registrierte Kapazitätsänderungen, die unterhalb der Kapazitätsschwelle bleiben, nicht für eine Ermittlung eines ersten Bewegungsmusters durch die Steuervorrichtung 10 verwertet. Damit kann ein Rauschen, welches von dem ersten Sensor 16 ebenfalls ungewünscht registriert werden kann, wirkungsvoll ausgefiltert werden. Weiterhin kann die erste Kapazitätsänderung in einem Verfahrensschritt 38 gewichtet werden. Dazu kann die Kapazitätsänderung, welche eine Änderung der Kapazität über die Zeit bedeutet, für bestimmte Zeitfenster stärker gewichtet werden. Dazu kann die Steuervorrichtung 10 die Kapazitätsänderung über die Zeit in einzelne Zeitfenster aufteilen, wobei die Zeitfenster mit stärkeren Kapazitätsänderungen stärker beachtet werden können als Zeitfenster mit kleineren Kapazitätsänderungen. Die Länge der Zeitfenster kann dabei variabel gewählt werden. In einem Verfahrensschritt 34 kann die Steuervorrichtung 10 aus der ersten Kapazitätsänderung eine Kennlinie bestimmen. Die Kennlinie kann dabei von der Steuervorrichtung 10 genutzt werden, um die Kennlinie mit gespeicherten Kennlinien, welche sich in einem Speicher der Steuervorrichtung 10 befinden können, zur Bestimmung eines Bewegungsmusters zu vergleichen. Auch ist in einem Verfahrensschritt 36 eine Bestimmung eines Kennwertes denkbar. Aus der Kennlinie oder dem Kennwert kann dann das Bewegungsmuster in dem Verfahrensschritt 31 ermittelt werden. In einem Verfahrensschritt 42 wird das Bewegungsmuster von der Steuervorrichtung 10 ausgewertet und bei einer positiven Auswertung des Bewegungsmusters die Funktion einer Sicherheitsvorrichtung 14 ausgelöst. Diese Ausführungen der Verfahrensschritte 40, 38, 34 und 36 zur Auswertung der ersten Kapazitätsänderung gelten ebenfalls für die Auswertung einer zweiten Kapazitätsänderung, welche über einen zweiten Sensor 20 registrierbar ist.

In Figur 4 ist schematisch ein Ablaufdiagramm dargestellt, welches das Ablaufdiagramm in Figur 4 weiterbildet. Dabei wird in einem Schritt 30 die erste Kapazitätsänderung, verursacht durch die Bewegung eines Objektes 18, durch den ersten kapazitiven Sensor 16 erfasst und parallel dazu in einem Verfahrensschritt 32 eine zweite Kapazitätsänderung, ebenfalls verursacht durch das Objekt, durch einen zweiten kapazitiven Sensor 20 erfasst. Die erste Kapazitätsänderung und die zweite Kapazitätsänderung werden zeitgleich an dieselbe Steuervorrichtung 10 ermittelt. Durch die erste und die zweite Kapazitätsänderung wird in einem Verfahrensschritt 33 durch die Steuervorrichtung 10 ein differenziertes Bewegungsmuster ermittelt. Die Steuervorrichtung 10 wertet das differenzierte Bewegungsmuster aus und bei einer positiven Auswertung wird eine Funktion einer Sicherheitsvorrichtung 14 ausgelöst. Die Verfahrensschritte 40, 38, 34 und 36 können ebenfalls zur Ermittlung des Bewegungsmusters für den Verfahrensschritt 33 herangezogen werden, so wie diese in Figur 4 beschrieben sind.

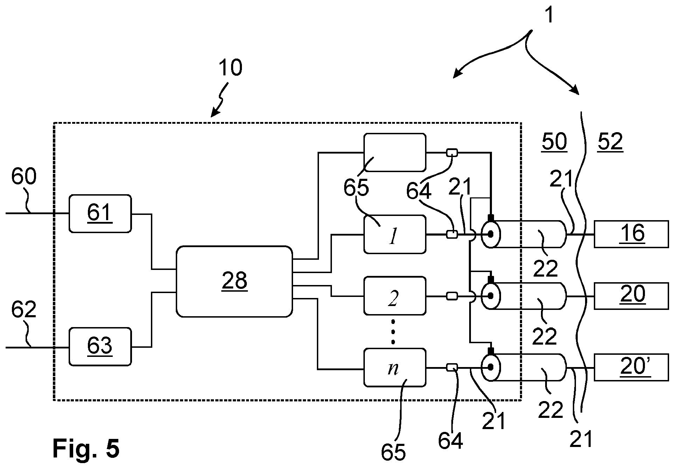

In der Figur 5 ist das erfindungsgemäße System 1 mit der einzigen Steuervorrichtung 10 dargestellt, an der die einzelnen kapazitiven Sensoren 16, 20, 20' usw. elektrisch leitend angeschlossen sind. An der Steuervorrichtung 10 können 1 bis n kapazitive Sensoren 16, 20, 20' angeschlossen werden (s. Nummerierung in Fig. 5 zum Schaltzeichen 65). Damit die Steuervorrichtung 10 nicht direkt an den kapazitiven Sensoren 16, 20 angeordnet werden muss, um die Messgenauigkeit zu erhöhen, werden die Zuleitungen 21 mit einer Abschirmung 22 versehen. Idealerweise umhüllt die Abschirmung 22 die Zuleitung 21 vollständig. Ferner ist es zweckmäßig, wenn die Abschirmung 22 von der Steuervorrichtung 10 bis kurz vor die Messelektrode 17, 19 des jeweiligen kapazitiven Sensors 16, 20, 20' geführt wird und nur die Messelektrode 17, 19 unabgeschirmt bleibt. Zweckmäßigerweise sind die jeweiligen Abschirmungen 22 für die einzelnen kapazitiven Sensoren 16, 20, 20' mit der Fahrzeugmasse verbunden. Mit der Schnittstelle 25 kann die Abschirmungen 22 auch schaltbar an die Fahrzeugmasse ausgestaltet sein. Außerdem kann zwischen jeder Zuleitung 21 und der Steuervorrichtung 10 eine Sicherung 64 und/oder ein Vorwiderstand 64 zwischengeschaltet sein, um die Rechnereinheit 28, die auch als Mess- und Auswerteelektronik 28 ausgestaltet sein kann, der Steuervorrichtung 10 vor schädlichen elektrischen Spannungen oder Strömen sicher zu schützen. Die zuvor erwähnte Rechnereinheit 28 kann durch einen oder mehrere Mikroprozessoren realisiert sein, die ebenfalls über den Feldbus 60, der als LIN- oder CAN-Bus ausgestaltet ist, verbunden werden können. Zusätzlich wird diese Rechnereinheit 28 mit einer Versorgungsspannung 62, die idealerweise vom Fahrzeugbordnetz stammt, elektrisch versorgt. Der Feldbus 60 sowie die Versorgungsspannung 62, können über die jeweils vorgesehenen Schnittstellen oder Stecker 61 bzw. 63 mit der Steuervorrichtung 10, insbesondere mit der Rechnereinheit 28 verbunden sein. Wie anhand der schematischen Darstellung des erfindungsgemäßen Systems 1 zu erkennen ist, kann die gesamte Steuervorrichtung 10 im Trockenbereich 50 vom Fahrzeug 12 angeordnet werden, wohingegen die eigentlichen Sensoren 16, 20, 20' im sensitiven Bereich oder Feuchtbereich des Fahrzeugs 12 anordbar sind.

### Bezugszeichenliste

- 1: System
- 10: Steuervorrichtung
- 12: Fahrzeug
- 14: Sicherheitsvorrichtung
- 15: Entriegelungsvorrichtung
- 16: erster kapazitiver Sensor
- 17: erste Elektrode
- 18: Objekt
- 19: zweite Elektrode
- 20: zweiter kapazitiver Sensor
- 21: Zuleitung
- 22: Abschirmung
- 23: Fahrzeugheck
- 24: Fahrzeugseite
- 26: Fahrzeugtür
- 28: Rechnereinheit / Mess- und/oder Auswerteelektronik
- 30 bis 42: Verfahrensschritt
- 50: Trockenraum, z. B. Fahrgastzelle, Kofferraum von 12
- 52: sensitiver Raum, z. B. Feuchtraum
- 60: Feldbus, z. B. LIN- oder CAN Bus
- 61: Schnittstelle / Stecker für 60
- 62: Energieversorgung / Bordspannung
- 63: Schnittstelle / Stecker für 62
- 64: Sicherung / Widerstand
- 65: Schnittstelle / Stecker für 16, 20 sowie 22

## Patentansprüche

1. System (1) für ein Fahrzeug (12) zur Auslösung wenigstens einer Funktion einer Sicherheitsvorrichtung (14), wobei die Sicherheitsvorrichtung (14) mit einer Steuervorrichtung (10) elektrisch verbunden ist, und
dass die Steuervorrichtung (10) zumindest einen ersten kapazitiven Sensor (16) aufweist, wobei durch den ersten kapazitiven Sensor (16) eine erste Kapazitätsänderung durch eine Bewegung eines Objektes (18) registrierbar und an die Steuervorrichtung (10) übermittelbar ist, wobei durch die erste Kapazitätsänderung ein erstes Bewegungsmuster des Objektes (18) durch die Steuervorrichtung (10) ermittelbar und auswertbar ist, wobei bei einer positiven Auswertung die Funktion der Sicherheitsvorrichtung (14) auslösbar ist, wobei der erste Sensor (16) an einem Fahrzeugheck (23) und ein zweiter Sensor (20) an einer Fahrzeugseite (24) angeordnet ist, wobei
der zweite kapazitiver Sensor (20) an der Steuervorrichtung (10) angeordnet ist, wobei durch den zweiten kapazitiven Sensor (20) eine zweite Kapazitätsänderung durch die Bewegung des Objektes (18) registrierbar ist, wobei durch die Registrierung der ersten Kapazitätsänderung und der zweiten Kapazitätsänderung ein differenzierteres Bewegungsmuster des Objektes (18) durch die Steuervorrichtung (10) ermittelbar ist, wobei
der erste Sensor (16) und/oder der zweite Sensor (20) als Elektrodenpaar mit einer ersten Elektrode (17) und einer zweiten Elektrode (19) ausgebildet ist, und
die Erfassung der ersten Kapazitätsänderung (30) und der zweiten Kapazitätsänderung (32) gleichzeitig durch die Steuervorrichtung (10) erfolgt.

2. System (1) nach Anspruch 1,
**dadurch gekennzeichnet,**
**dass** durch die erste Elektrode (17) und die zweite Elektrode (19) unabhängig voneinander eine Kapazitätsänderung erfassbar ist.

3. System (1) nach einem der vorhergehenden Ansprüche,
**dadurch gekennzeichnet,**
**dass** der erste Sensor (16) und der zweite Sensor (20) im Wesentlichen horizontal angeordnet ist.

4. System (1) nach einem der vorhergehenden Ansprüche,
**dadurch gekennzeichnet,**
**dass** der erste Sensor (16) an einem Fahrzeugheck (23), nämlich an einem Stoßfänger des Fahrzeuges (12) angeordnet ist.

5. System (1) einem der vorhergehenden Ansprüche,
**dadurch gekennzeichnet,**
**dass** die Steuervorrichtung (10) mit einem Feldbus, insbesondere einem CAN-Bus bzw. LIN-Bus, verbunden ist.

6. System (1) nach einem der vorhergehenden Ansprüche,
**dadurch gekennzeichnet,**
**dass** die Sicherheitsvorrichtung (14) eine Entriegelungvorrichtung (15) zur Entriegelung einer Fahrzeugtür (26) und/oder Öffnungvorrichtung einer Fahrzeugtür (26) ist, und/oder dass die Öffnungsvorrichtung einen elektromechanischen Antrieb aufweist, wobei durch den elektromechanischen Antrieb die Fahrzeugtür (26) bewegbar ist.

7. System (1) nach einem der vorhergehenden Ansprüche,
**dadurch gekennzeichnet,**
**dass** die Steuervorrichtung (10) eine Rechnereinheit (28) aufweist, wobei durch die Rechnereinheit (28) der Kapazitätsänderung des ersten Sensors (16) und der Kapazitätsänderung des zweiten Sensors (20) ein Kennwert zuordbar ist.

8. Verfahren zur Auslösung wenigstens einer Funktion einer Sicherheitsvorrichtung (14) für ein Fahrzeug (12), wobei die Sicherheitsvorrichtung (14) mit einer Steuervorrichtung (10) elektrisch verbunden ist, und
dass die Steuervorrichtung (10) einen ersten kapazitiven Sensor (16) aufweist, wobei durch den ersten kapazitiven Sensor (16) eine erste Kapazitätsänderung (30) durch eine Bewegung eines Objektes (18) registriert und an die Steuervorrichtung (10) übermittelt wird, wobei durch die erste Kapazitätsänderung (30) ein erstes Bewegungsmuster (31) des Objektes (18) durch die Steuervorrichtung (10) ermittelt und ausgewertet wird, wobei bei einer positiven Auswertung (42) die Funktion der Sicherheitsvorrichtung (14) ausgelöst wird, wobei
der erste Sensor (16) an einem Fahrzeugheck (23) und ein zweiter Sensor (20) an einer Fahrzeugseite (24) angeordnet ist, und der zweite kapazitiver Sensor (20) an der Steuervorrichtung (10) angeordnet ist, wobei durch den zweiten kapazitiven Sensor (20) eine zweite Kapazitätsänderung (32) durch die Bewegung des Objektes (18) registriert wird, wobei durch die Registrierung der ersten Kapazitätsänderung (30) und der zweiten Kapazitätsänderung (32) ein differenziertes Bewegungsmuster (33) des Objektes (18) ermittelt wird, wobei der erste Sensor (16) und/oder der zweite Sensor (20) als Elektrodenpaar mit einer ersten Elektrode (17) und einer zweiten Elektrode (19) ausgebildet ist, und
die Erfassung der ersten Kapazitätsänderung (30) und der zweiten Kapazitätsänderung (32) gleichzeitig durch die Steuervorrichtung (10) erfolgt.

9. Verfahren nach Anspruch 8,
**dadurch gekennzeichnet,**
**dass** der ersten (30) und/oder zweiten Kapazitätsänderung (32) eine Kennlinie (34), insbesondere ein Kennwert (36) zugeordnet wird,
und/oder dass eine Gewichtung (38) der ersten Kapazitätsänderung (30) und/oder der zweiten Kapazitätsänderung (32) erfolgt.

10. Verfahren nach Anspruch 8 oder 9,
**dadurch gekennzeichnet,**
**dass** die Registrierung der ersten Kapazitätsänderung (30) und/oder der zweiten Kapazitätsänderung (32) ab einer bestimmten Kapazitätsschwelle (40) erfolgt.

11. Verfahren nach einem der Ansprüche 8 bis 10, wobei das Verfahren auf einem System gemäß einem der Ansprüche 1 bis 7 betrieben wird.

## Claims

1. System (1) for a vehicle (12) for triggering at least one function of a safety device (14), wherein the safety device (14) is electrically connected to a control device (10), and wherein the control device (10) comprises at least one first capacitive sensor (16), wherein a first capacitance change caused by a movement of an object (18) can be registered by the first capacitive sensor (16) and transmitted to the control device (10), wherein a first movement pattern of the object (18) can be determined and evaluated by the control device (10) by means of the first capacitance change, wherein the function of the safety device (14) can be triggered in the event of a positive evaluation,
**wherein**
the first sensor (16) is arranged on a vehicle rear (23) and a second sensor (20) is arranged on a vehicle side (24), wherein
the second capacitive sensor (20) is arranged on the control device (10), wherein a second capacitance change caused by the movement of the object (18) can be registered by the second capacitive sensor (20), wherein a more differentiated movement pattern of the object (18) can be determined by the control device (10) by registering the first capacitance change and the second capacitance change, wherein
the first sensor (16) and/or the second sensor (20) are formed as an electrode pair with a first electrode (17) and a second electrode (19), and
the sensing of the first capacitance change (30) and the second capacitance change (32) occurs simultaneously by the control device (10).

2. System (1) according to claim 1,
**characterized in that**
a capacitance change can be sensed independently of one another by the first electrode (17) and the second electrode (19).

3. System (1) according to one of the preceding claims,
**characterized in that**
the first sensor (16) and the second sensor (20) are arranged substantially horizontally.

4. System (1) according to one of the preceding claims,
**characterized in that**
the first sensor (16) is arranged on a vehicle rear (23), namely on a bumper of the vehicle (12).

5. System (1) according to one of the preceding claims,
**characterized in that**
the control device (10) is connected to a field bus, in particular a CAN bus or a LIN bus.

6. System (1) according to one of the preceding claims,
**characterized in that**
the safety device (14) is an unlocking device (15) for unlocking a vehicle door (26) and/or an opening device of a vehicle door (26),
and/or the opening device comprises an electromechanical drive, wherein the vehicle door (26) can be moved by the electromechanical drive.

7. System (1) according to one of the preceding claims,
**characterized in that**
the control device (10) comprises a computing unit (28), wherein a characteristic value can be assigned to the capacitance change of the first sensor (16) and the capacitance change of the second sensor (20) by the computing unit (28).

8. Method for triggering at least one function of a safety device (14) for a vehicle (12), wherein the safety device (14) is electrically connected to a control device (10), and
wherein the control device (10) comprises a first capacitive sensor (16), wherein a first capacitance change (30) caused by a movement of an object (18) is registered by the first capacitive sensor (16) and transmitted to the control device (10), wherein a first movement pattern (31) of the object (18) is determined and evaluated by the control device (10) by means of the first capacitance change, wherein the function of the safety device (14) is triggered in the event of a positive evaluation, wherein the first sensor (16) is arranged on a vehicle rear (23) and a second sensor (20) is arranged on a vehicle side (24), and
the second capacitive sensor (20) is arranged on the control device (10), wherein a second capacitance change (32) caused by the movement of the object (18) is registered by the second capacitive sensor (20), wherein a differentiated movement pattern (33) of the object (18) is determined by registering the first capacitance change (30) and the second capacitance change (32), wherein
the first sensor (16) and/or the second sensor (20) are formed as an electrode pair with a first electrode (17) and a second electrode (19), and
the sensing of the first capacitance change (30) and the second capacitance change (32) occurs simultaneously by the control device (10).

9. Method according to claim 8,
**characterized in that**
a characteristic curve (34), in particular a characteristic value (36), is assigned to the first (30) and/or second capacitance change (32),
and/or a weighting (38) of the first capacitance change (30) and/or of the second capacitance change (32) occurs.

10. Method according to claim 8 or 9,
**characterized in that**
the registration of the first capacitance change (30) and/or the second capacitance change (32) occurs above a certain capacitance threshold (40).

11. Method according to one of claims 8 to 10, wherein the method is operated on a system according to one of claims 1 to 7.

## Revendications

1. Système (1) pour un véhicule (12) permettant de déclencher au moins une fonction d'un dispositif de sécurité (14), le dispositif de sécurité (14) étant relié électriquement à un dispositif de commande (10), et
le dispositif de commande (10) présente au moins un premier capteur capacitif (16), une première variation de capacité provoquée par un mouvement d'un objet (18) pouvant être enregistrée par le premier capteur capacitif (16) et transmise au dispositif de commande (10), un premier modèle de mouvement de l'objet (18) pouvant être déterminé et évalué par le dispositif de commande (10) au moyen de la première variation de capacité, la fonction du dispositif de sécurité (14) pouvant être déclenché en cas d'évaluation positive, **où**
le premier capteur (16) est disposé à l'arrière du véhicule (23) et un deuxième capteur (20) est disposé sur le côté du véhicule (24), où
le deuxième capteur capacitif (20) est disposé sur le dispositif de commande (10), une deuxième variation de capacité provoquée par le mouvement de l'objet (18) pouvant être enregistrée par le deuxième capteur capacitif (20), un modèle de mouvement plus différencié de l'objet (18) pouvant être déterminé par le dispositif de commande (10) en enregistrant la première variation de capacité et la deuxième variation de capacité, dans lequel
le premier capteur (16) et/ou le deuxième capteur (20) est conçu comme une paire d'électrodes avec une première électrode (17) et une deuxième électrode (19), et
le premier variation de capacité (30) et le deuxième variation de capacité (32) sont détectés simultanément par le dispositif de commande (10).

2. Système (1) selon la revendication 1,
**caractérisé en ce qu'**
une variation de capacité peut être détectée par la première électrode (17) et la deuxième électrode (19) indépendamment l'une de l'autre.

3. Système (1) selon l'un des revendications précédentes,
**caractérisé en ce que**
le premier capteur (16) et le deuxième capteur (20) sont disposés sensiblement horizontalement.

4. Système (1) selon l'un des revendications précédentes,
**caractérisé en ce que**
le premier capteur (16) est disposé à l'arrière du véhicule (23), à savoir sur un pare-chocs du véhicule (12).

5. Système (1) selon l'un des revendications précédentes,
**caractérisé en ce que**
le dispositif de commande (10) est connecté à un bus de terrain, en particulier un bus CAN ou un bus LIN.

6. Système (1) selon l'un des revendications précédentes,
**caractérisé en ce que**
le dispositif de sécurité (14) est un dispositif de déverrouillage (15) pour déverrouiller une porte de véhicule (26) et/ou un dispositif d'ouverture d'une porte de véhicule (26), et/ou le dispositif d'ouverture présente un entraînement électromécanique, la porte du véhicule (26) étant mobile au moyen de l'entraînement électromécanique.

7. Système (1) selon l'un des revendications précédentes,
**caractérisé en ce que**
le dispositif de commande (10) présente une unité de calcul (28), l'unité de calcul (28) pouvant attribuer une valeur caractéristique à la variation de capacité du premier capteur (16) et à la variation de capacité du deuxième capteur (20).

8. Procédé pour déclencher au moins une fonction d'un dispositif de sécurité (14) pour un véhicule (12), le dispositif de sécurité (14) étant relié électriquement à un dispositif de commande (10), et
le dispositif de commande (10) présente un premier capteur capacitif (16), une première variation de capacité (30) provoquée par un mouvement d'un objet (18) étant enregistrée par le premier capteur capacitif (16) et transmise au dispositif de commande (10), un premier modèle de mouvement (31) de l'objet (18) étant déterminé et évalué par le dispositif de commande (10) au moyen de la première variation de capacité (30), la fonction du dispositif de sécurité (14) étant déclenchée en cas d'évaluation positive (42), où
le premier capteur (16) est disposé à l'arrière du véhicule (23) et un deuxième capteur (20) est disposé sur le côté du véhicule (24),
et le deuxième capteur capacitif (20) est disposé sur le dispositif de commande (10), une deuxième variation de capacité (32) provoquée par le mouvement de l'objet (18) est enregistrée par le deuxième capteur capacitif (20), un modèle de mouvement différencié (33) de l'objet (18) est déterminé par l'enregistrement de la première variation de capacité (30) et de la deuxième variation de capacité (32), où
le premier capteur (16) et/ou le deuxième capteur (20) est conçu comme une paire d'électrodes avec une première électrode (17) et une deuxième électrode (19), et
le premier variation de capacité (30) et le deuxième variation de capacité (32) sont détectés simultanément par le dispositif de commande (10).

9. Procédé selon la revendication 8,
**caractérisé en ce que**
la première (30) et/ou la deuxième variation de capacité (32) se voit attribuer une courbe caractéristique (34), en particulier une valeur caractéristique (36),
et/ou une pondération (38) du premier variation de capacité (30) et/ou du deuxième variation de capacité (32) a lieu.

10. Procédé selon la revendication 8 ou 9,
**caractérisé en ce que**
l'enregistrement du premier variation de capacité (30) et/ou du deuxième variation de capacité (32) a lieu au-dessus d'un certain seuil de capacité (40).

11. Procédé selon l'une des revendications 8 à 10, dans lequel le procédé est exploitée sur un système selon l'une des revendications 1 à 7.
